Europäisches Patentamt

European Patent Office

Office européen des brevets

(19)

(11) Publication number : **0 448 526 A1**

(12)

# EUROPEAN PATENT APPLICATION

(21) Application number : **91830092.2**

(51) Int. Cl.⁵ : **F16H 61/36, G05G 9/02**

(22) Date of filing : **12.03.91**

(30) Priority : **20.03.90 IT 6720290**

(43) Date of publication of application :
**25.09.91 Bulletin 91/39**

(84) Designated Contracting States :
**DE ES FR GB IT SE**

(71) Applicant : **FIAT AUTO S.p.A.**
**Corso Giovanni Agnelli 200**
**I-10135 Torino (IT)**

(72) Inventor : **Barbiero, Davide**
**Via Ponchielli 43**
**I-10024 Moncalieri (Torino) (IT)**
Inventor : **Manassero, Renzo**
**Via Cassiano 4**
**I-12035 Racconigi (Cuneo) (IT)**

(74) Representative : **Buzzi, Franco et al**
**c/o Jacobacci-Casetta & Perani S.p.A. Via**
**Alfieri, 17**
**I-10121 Torino (IT)**

(54) A device for operating a motor-vehicle gearbox.

(57)    An operating device for a motor-vehicle gearbox in which a gear lever (1) operates an actuator ($A_1$) for selecting and an actuator ($A_2$) for engaging the gear ratios of the gearbox by means of a shaft transmission (2) and a flexible-cable transmission (3), respectively.

EP 0 448 526 A1

FIG. 1

## A DEVICE FOR OPERATING A MOTOR-VEHICLE GEARBOX

The present invention relates to a device for operating a motor-vehicle gearbox, of the type comprising a manual gear lever which is supported by the structure of the vehicle in a position remote from the gearbox and is movable with a movement for selecting and a movement for engaging the gear ratios of the gearbox, first and second actuators which are situated at the input of the gearbox and can respectively select and engage the gear ratios of the gearbox in response to the movements of the gear lever, and transmission means which interconnect the gear lever and the first and second actuators.

An operating device of this type is known, for example, from EP-B-115,224 according to which the gear lever is supported by the structure of the vehicle by means of a ball joint and is articulated at its lower end to a shaft arranged substantially parallel to the longitudinal axis of the vehicle. This longitudinal shaft is rotatable in response to the selection movements of the gear lever and slidable axially in response to the engagement movements of the lever, and operates each of the two actuators by means of respective transmissions with rigid elements (levers and tie rods).

This solution involves various problems: in the first place, the kinematic mechanism for transmitting the movement from the longitudinal shaft to the engagement actuator is quite complicated and causes vibrations and noise in operation. In the second place, the use of a common element, that is, the rotatable and slidable longitudinal shaft, to impart the selection and engagement commands may involve an imprecise shift to the preselected gear, particularly with reference to the engagement operation.

The object of the present invention is to avoid these problems and this object is achieved by means of a gearbox operating device of the type defined above in which the transmission means which interconnect the gear lever and the first and second actuators include a longitudinal shaft, characterised in that the longitudinal shaft operates only the first actuator and in that the transmission means include an independent flexible-cable transmission for the engagement actuator.

According to a first embodiment of the invention, the longitudinal shaft is supported rotatably at one end by the structure of the vehicle for pivoting in a horizontal plane, a support being fixed directly to the shaft and the gear lever being articulated to the support about an axis transverse the longitudinal shaft whose other end is supported by the structure of the vehicle for rotation and carriers an arm to which a transverse shaft articulated to the first actuator is pivotably connected, and the flexible-cable transmission comprises:

– a first sheath support fixed to the longitudinal shaft,
– a second sheath support fixed to the gearbox beside the said other end of the longitudinal shaft,
– a sheath arranged between the first and second supports,
– a flexible-cable slidable in the sheath and having one end anchored to the gear lever and its opposite end anchored to the second actuator.

The said other end of the longitudinal shaft is in this case preferably formed with a tubular portion which is mounted rotatably and slidable in the transverse direction on a spherical head fixed to the structure of the vehicle, and a tie rod which is substantially parallel to the transverse shaft articulates the second support to the said other end of the longitudinal shaft.

In a second embodiment of the invention, the said other end of the longitudinal shaft is directly supported by a ball joint fixed to the structure of the vehicle.

The terms "longitudinal" and "transverse" in the foregoing and following refer to the condition in which the operating device according to the invention is mounted in a motor vehicle and relate to the longitudinal and transverse axes thereof, respectively.

The invention will now be described in detail with reference to the appended drawings provided purely by way of non-limiting example, in which:

– figure 1 shows schematically and in perspective a device according to a first embodiment of the invention for operating a motor-vehicle gearbox, and
– figure 2 shows a second embodiment of the device.

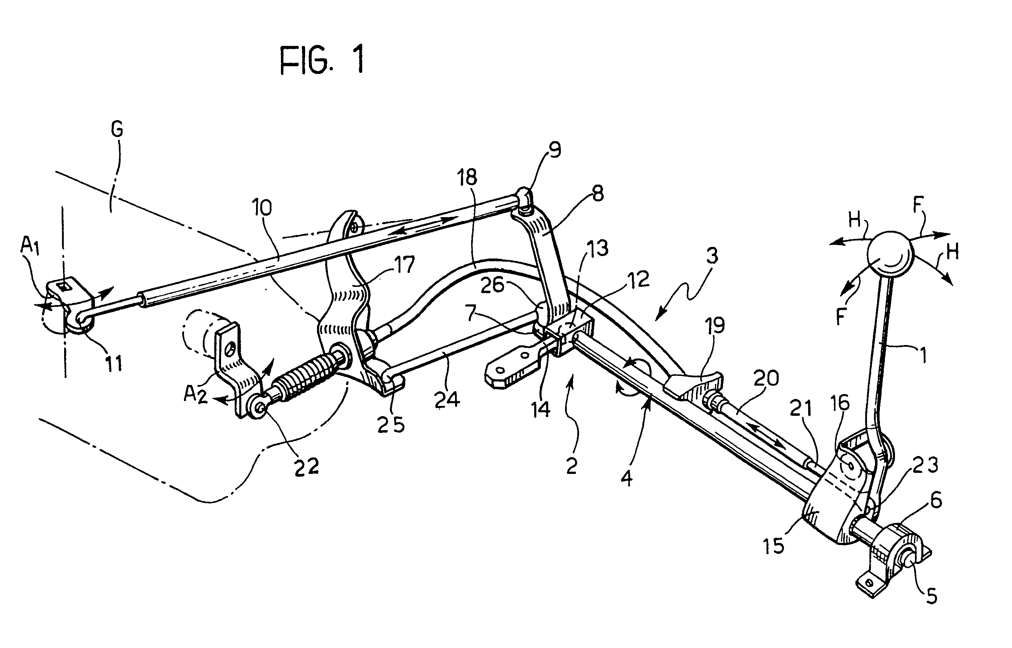

In figure 1, a motor-vehicle gearbox, schematically indicated G, in known manner has respective pivoted-lever actuator members $A_1$ and $A_2$ for selecting and engaging the gear ratios available in the gearbox G. The selection and engagement actuators $A_1$ and $A_2$ are operated by a manual gear lever 1 through a rigid-shaft transmission 2 and a flexible-cable transmission 3 respectively, the two transmission being kinematically independent of each other.

The selection transmission 2 comprises a longitudinal shaft 4 whose rear end 5 is supported for rotation about its own axis by the structure of the vehicle by means of a support 6 which is adapted to permit limited pivoting of the longitudinal shaft 4 in a horizontal plane. For this purpose, the support 6 may include a resiliently yielding member, not shown.

An upwardly-extending arm 8 is fixed to the other end, indicated 7, of the longitudinal shaft 4 and a transverse shaft 10 articulated at 11 to the selection actuator $A_1$ is connected to the top of the arm 8 by means of a ball joint 9.

Near its end 7, the longitudinal shaft 4 forms a tubular body 12 with a quadrangular cross-section which is slidable transversly and rotatable on a spherical head 13 carried by a support arm 14 fixed to the structure of the vehicle.

A support 15 is fixed directly to the longitudinal shaft 4 near the rear end 5 thereof and carries a transverse pin 16 to which the gear lever 1 is articulated. Unlike conventional devices, therefore, the gear lever 1 has no ball joint for its articulation to the structure of the vehicle but is supported by the longitudinal shaft 4 which in turn is supported by the structure of the vehicle in the manner described above.

The flexible-cable transmission 3 includes a support 17 which is fixed to the structure of the gearbox G beside the front end 7 of the longitudinal shaft 4 and to which one end of a flexible sheath 18 is anchored. The other end of the sheath 18 is anchored to a support 19 fixed laterally to a central region of the longitudinal shaft 4. Fixed to the support 19 is a tubular guide 20 through which is slidable a flexible cable 21 extending through the sheath 18 and the support 17 and anchored at one end to the engagement actuator $A_2$ at 22. The other end of the flexible cable 21 is anchored at 23 to the lower end of the gear lever 1, below its transverse articulation pin 16.

A tie rod 24 substantially parallel to the transverse shaft 10 is articulated at one end to the base of the support 17 at 25 and at the opposite end to the front end 7 of the longitudinal shaft 4 by means of a ball joint 26.

In operation, the selection movements imparted to the gear lever 1 in the directions of the arrows F cause corresponding rotations of the longitudinal shaft 4 in one sense or the other and, by means of the arm 8, corresponding translations of the transverse shaft 10 in one direction or the other to select the gear ratios by means of the actuator $A_1$.

The engagement movements imparted to the gear lever 1 in the directions of the arrows H cause corresponding displacements of the actuator $A_2$ by means of the flexible cable 21 to engage the ratio selected.

Any displacements and vibrations transverse the gearbox G are translated by the tie rod 24 into corresponding displacements of the longitudinal shaft 4, by virtue of the fact that it is mounted for pivoting in a horizontal plane as described above. The precision of the selection movements is thus unaffected by these displacements and vibrations of the gearbox G.

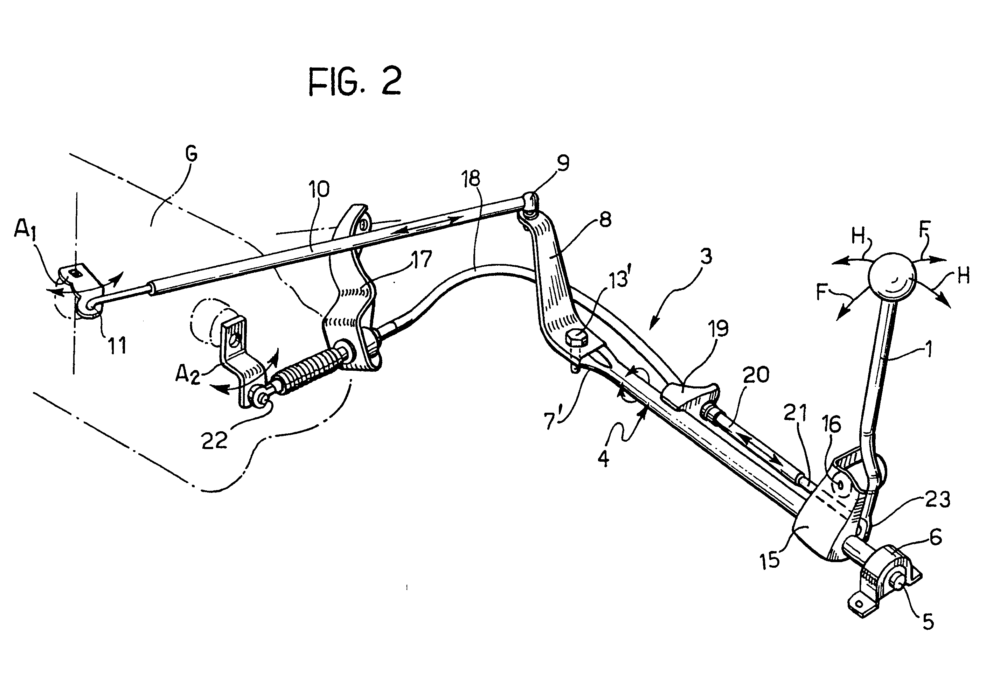

The variant shown in figure 2 is generally similar to the embodiment disclosed above, and only the differences will be described in the following, using the same reference numerals for identical or similar parts.

In such embodiment, the end 7' of the longitudinal shaft 4 opposite to the support 6 is directly supported, in correspondence of its connection to the arm 8, by a ball joint 13' fixed to the structure of the vehicle. The tie rod 24 between the shaft 4 and the support 17 is in this case suppressed.

Naturally, the details of constructions and forms of embodiment may be varied widely with respect to those described and illustrated, without thereby departing from the scope of the present invention.

## Claims

1. A device for operating a motor-vehicle gearbox comprising a manual gear lever which is supported by the structure of the vehicle in a position remote from the gearbox and is movable with a movement for selecting and a movement for engaging the gear ratios of the gearbox, first and second actuators which are situated at the input of the gearbox and can respectively select and engage the gear ratios of the gearbox in response to the movements of the gear lever, and transmission means which interconnect the gear lever and the first and second actuators and include a longitudinal shaft, characterised in that the longitudinal shaft (4) operates only the first actuator ($A_1$) and in that the transmission means include an independent flexible-cable transmission (3) for the second actuator ($A_2$).

2. A device according to claim 1, characterised in that the longitudinal shaft (4) is supported rotatably at one end (5) by the structure of the vehicle for pivoting in a horizontal plane, a support (15) being fixed directly to the shaft (4) and the gear lever (1) being articulated to the support (15) about a transverse axis, the other end (7) of the longitudinal shaft (4) being supported by the structure of the vehicle for rotation and carrying an arm (8) to which a transverse shaft (10) articulated to the first actuator ($A_1$) is pivotably connected, and in that the flexible-cable transmission (3) comprises:
   – a first sheath support (19) fixed to the longitudinal shaft (4),
   – a second sheath support (17) fixed to the gearbox (G) beside the said other end (7) of the longitudinal shaft (4),
   – a sheath (18) arranged between the first and second supports (19, 17), and
   – a flexible cable (21) slidable in the sheath (18) and having one end (23) anchored to the gear lever (1) and its opposite end (22) anchored to the second actuator ($A_2$).

3. A device according to claim 2, characterised in that the said other end (7) of the longitudinal shaft (4) is formed with a tubular portion (17) mounted rotatably and slidably in the transverse direction on a spherical head (13) fixed to the structure of the vehicle, and

– a tie rod (24) which is substantially parallel to the transverse shaft (10) articulates the second support (17) to the said other end (7) of the longitudinal shaft.

4. A device according to claim 2, characterised in that the said other end (7') of the longitudinal shaft (4) is directly supported by a ball joint (13') fixed to the structure of the vehicle.

FIG. 1

# FIG. 2

EP 0 448 526 A1

European Patent Office

## EUROPEAN SEARCH REPORT

Application Number

EP    91 83 0092

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-333429 (MORSE) <br> * column 3, line 29 - column 5, line 5; figure 1 * | 1 | F16H61/36 <br> G05G9/02 |
| Y | | 2-4 | |
| Y,D | EP-A-115224 (PEUGEOT) <br> * page 3, line 22 - page 4, line 12; figures 1-2 * | 2-3 | |
| A,D | | 1 | |
| Y | EP-A-84751 (PEUGEOT) <br> * page 4, lines 1 - 18; figures 1-2 * | 2, 4 | |
| A | | 1 | |
| A | EP-A-84472 (PEUGEOT) <br> * page 5, lines 1 - 18; figure 1 * | 1-4 | |
| A | FR-A-2178128 (VW) <br> * page 4, line 11 - page 5, line 20; figures 1-3 * | 1-3 | |

| | TECHNICAL FIELDS SEARCHED (Int. Cl.5 ) |
|---|---|
| | F16H <br> G05G <br> B60K |

The present search report has been drawn up for all claims

| Place of search | Date of completion of the search | Examiner |
|---|---|---|
| THE HAGUE | 24 JUNE 1991 | FLODSTROEM J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)